# EUROPÄISCHE PATENTSCHRIFT

(11) **EP 4 041 599 B1**
(45) Veröffentlichungstag und Bekanntmachung des Hinweises auf die Patenterteilung: **20.12.2023**
(21) Anmeldenummer: 20788761.3
(22) Anmeldetag: 07.10.2020
(51) Int. Cl.: B60Q 1/26, B60Q 1/46, B60Q 1/50, F21S 43/237, F21S 43/245, F21S 43/249, F21V 8/00

(54) **LICHTSIGNALVORRICHTUNG FÜR EIN FAHRERLOSES TRANSPORTSYSTEM**
LIGHT SIGNALING DEVICE FOR A DRIVERLESS TRANSPORT SYSTEM
DISPOSITIF DE SIGNALISATION LUMINEUSE POUR UN SYSTÈME DE TRANSPORT SANS CONDUCTEUR

(30) Priorität: 07.10.2019 DE 102019215332
(43) Veröffentlichungstag der Anmeldung: 17.08.2022
(73) Patentinhaber: W. Gessmann GmbH, 74211 Leingarten (DE)
(72) Erfinder: EGGENSPERGER, Martin, 74078 Heilbronn (DE); HERZIG, Andrew, 74226 Nordheim (DE); BACHMANN, Jonas, 74080 Heilbronn (DE); CRISTEA, Alexander, 74078 Heilbronn (DE); GSCHELAK, Matthias, 74193 Stetten (DE)
(74) Vertreter: Kohler Schmid Möbus Patentanwälte
(86) Internationale Anmeldenummer: PCT/EP2020/078103
(87) Internationale Veröffentlichungsnummer: WO 2021/069485

(56) Entgegenhaltungen:
- EP-A1- 3 273 149
- EP-A1- 3 369 616
- EP-A1- 3 369 622
- EP-A1- 3 450 253
- DE-A1- 4 129 094
- JP-A- 2013 037 963
- US-A- 6 114 954
- US-A1- 2014 119 038
- US-A1- 2016 290 626
- US-A1- 2018 319 329
- US-A1- 2019 248 421

## Beschreibung

### Hintergrund der Erfindung

Die Erfindung betrifft eine Lichtsignalvorrichtung für ein fahrerloses Transportsystem, eine Lichtsignalanordnung für ein fahrerloses Transportsystem und ein fahrerloses Transportsystem. Ferner betrifft die Erfindung eine Verwendung einer Lichtsignalvorrichtung und ein Betriebsverfahren für ein fahrerloses Transportsystem.

Fahrerlose Transportsysteme werden verbreitet zum Transport von Lasten in der Fertigung und Logistik eingesetzt.

Es ist bekannt, fahrerlose Transportsysteme durch umlaufend angeordnete LED-Strips oder mittels LED-Matrizen zu beleuchten. Hierfür werden in der Praxis bisher oft viele LEDs mit einem entsprechend großen Stromverbrauch benötigt, was im Hinblick auf die begrenzte Akkukapazität des fahrerlosen Transportsystems nachteilig ist. Oft erfolgt eine statische Beleuchtung mit gleichbleibender Beleuchtungshelligkeit und -farbe, durch welche im Wesentlichen nur die Position bzw. Kontur des fahrerlosen Transportsystems hervorgehoben werden kann.

US 2012/0280528 A1 beschreibt eine Lichtleiste für eine Außenfläche eines Fahrzeugs mit einem Lichtleiter, in den an mehreren Stellen Licht aus LEDs eingekoppelt wird. Eine Rückseite des Lichtleiters ist derart behandelt, dass Licht zur Vorderseite des Lichtleiters hinausreflektiert wird. Frontseitig weist die Lichtleiste einen Einwegspiegel auf, der bereichsweise maskiert sein kann, sodass beispielsweise leuchtende Buchstaben erscheinen.

DE 10 2012 211 052 A1 offenbart eine Kraftfahrzeuginnenbeleuchtung mit einer Vielzahl von Lichtquellen und einer Vielzahl von Lichtleitern, wobei die Lichtquellen und Lichtleiter derart ausgeführt und relativ zueinander angeordnet sind, dass Licht verschiedener Lichtquellen in verschiedene Lichtleiter eingekoppelt wird. Die Lichtleiter weisen jeweils mehrere in Hauptlichtausbreitungsrichtung beabstandete Auskoppelbereiche auf. Die Lichtleiter können nebeneinander verlaufend angeordnet sein. Die Lichtleiter können an einen im wesentlichen transparenten Streukörper gehalten sein. Am Ort einer Ausnehmung einer Fahrzeugtür-Innenverkleidung kann der Streukörper eine Diffusionsplatte oder eine bedruckte Folie aufweisen, durch welche das durch den Streukörper geführte und an der Ausnehmung ausgekoppelte Licht homogenisiert wird.

DE 41 29 094 A1 offenbart eine weitere Lichtsignalvorrichtung.

### Aufgabe der Erfindung

Es ist Aufgabe der Erfindung, die Wahrnehmbarkeit von fahrerlosen Transportsystemen zu verbessern.

### Beschreibung der Erfindung

Diese Aufgabe wird erfindungsgemäß gelöst durch eine Lichtsignalvorrichtung nach Anspruch 1, eine Lichtsignalanordnung nach Anspruch 5, ein fahrerloses Transportsystem nach Anspruch 9, eine Verwendung gemäß Anspruch 15 und ein Betriebsverfahren gemäß Anspruch 16.

### Erfindungsgemäße Lichtsignalvorrichtung

Erfindungsgemäß ist eine Lichtsignalvorrichtung für ein fahrerloses Transportsystem vorgesehen. Die Lichtsignalvorrichtung dient zur optischen Hervorhebung des fahrerlosen Transportsystems, insbesondere eines Betriebszustands des fahrerlosen Transportsystems. Dadurch können Aktionen des fahrerlosen Transportsystems von Menschen, beispielsweise Fertigungsmitarbeitern, besser eingeschätzt werden. Dies kann dazu beitragen, die Akzeptanz für fahrerlose Transportsysteme zu erhöhen und Unfälle zu vermeiden.

Die Lichtsignalvorrichtung weist ein Frontelement mit einer Vielzahl von optisch transparenten Lichtaustrittsöffnungen auf. Durch die Lichtaustrittsöffnungen kann beim Betrieb der Lichtsignalvorrichtung Licht austreten. Abgesehen von den Lichtaustrittsöffnungen ist das Frontelement grundsätzlich intransparent, d. h. nicht lichtdurchlässig. Die Lichtaustrittsöffnungen sind mit anderen Worten als optisch transparente Bereiche in dem im Übrigen intransparenten Frontelement ausgebildet. Die Lichtaustrittsöffnungen können als physische Öffnungen, d. h. Durchbrechung des Frontelements, ausgebildet sein. Vorzugsweise kann das Frontelement eine (physisch) geschlossene Oberfläche aufweisen, wobei das Frontelement abschnittsweise transparent (zur Bildung der

Lichtaustrittsöffnungen) und (im Übrigen) intransparent ist. Das Frontelement kann insgesamt eine ebene, insbesondere glatte, Oberfläche aufweisen. Alternativ können die Lichtaustrittsöffnungen vertieft oder erhaben an der Oberfläche des Frontelements ausgebildet sein. Durch die Verteilung, Größe, Anordnung und/oder Gestaltung der Lichtaustrittsöffnungen an dem Frontelement kann die optische Wirkung der Lichtsignalvorrichtung im Betrieb in für den jeweiligen Anwendungsfall geeigneter Weise gestaltet werden. Wenn die Lichtsignalvorrichtung kein Licht emittiert, sind die Lichtaustrittsöffnungen typischerweise mit bloßem Auge nicht erkennbar. Das Frontelement kann, zumindest an seiner sichtbaren Oberfläche, schwarz sein. Dies kann zur verbesserten Wahrnehmbarkeit von Beleuchtungseffekten und zum Verbergen der Lichtaustrittsöffnungen im nicht hinterleuchteten Zustand beitragen.

Die Lichtsignalvorrichtung weist weiterhin mehrere Lichterzeugungseinheiten auf. Jede Lichterzeugungseinheit umfasst einen Lichtleiter und zwei an gegenüberliegenden Enden des Lichtleiters angeordnete Lichtquellen. Die Lichtquellen dienen der Einleitung von Licht in den Lichtleiter an dessen Enden. Insbesondere können die Lichtquellen zur Einleitung von Licht in Stirnseiten des Lichtleiters ausgebildet und angeordnet sein. Der Lichtleiter kann aus PMMA (Polymethylmethacrylat) bestehen. Der Lichtleiter ist typischerweise langgestreckt ausgebildet. Eine Länge des Lichtleiters zwischen den beiden Lichtquellen kann wenigstens fünfmal, typischerweise wenigstens 10-mal, vorzugsweise wenigstens 20-mal, so groß sein wie eine senkrecht zu der Längserstreckung gemessene Breite bzw. Höhe des Lichtleiters.

Der Lichtleiter weist eine Vielzahl von Lichtauskoppelelementen auf, um Licht durch die Lichtaustrittsöffnungen zu emittieren. Die Lichtauskoppelelemente ermöglichen es, das Licht von den zwei Lichtquellen zu der Vielzahl von Lichtaustrittsöffnungen zu leiten und durch die Vielzahl von Lichtaustrittsöffnungen abzustrahlen. Die Lichtauskoppelelemente können durch mechanische Bearbeitung, zum Beispiel Fräsen, oder durch Bedrucken, zum Beispiel Tampon-, Digital-, oder Siebdruck, in den Lichtleiter eingebracht sein. Eine bearbeitete bzw. bedruckte Stelle des Lichtleiters bildet typischerweise jeweils ein Lichtauskoppelelement. Das Frontelement kann als ein Diffusormedium für von den Lichtleitern ausgekoppeltes Licht wirken.

Erfindungsgemäß wird einer Mehrzahl von Lichtaustrittsöffnungen Licht durch ein einziges Lichtauskoppelelement des Lichtleiters zugeführt. Der Lichtleiter kann Lichtauskoppelelemente aufweisen, die keiner Lichtaustrittsöffnungen zugeordnet sind. Dies kann es ermöglichen, baugleiche Lichtleiter mit unterschiedlichen Frontelementen zu verwenden, wobei je nach Frontelement unterschiedliche Lichtauskoppelelemente mit Lichtaustrittsöffnungen zusammenwirken.

Der Lichtleiter kann sich geradlinig erstrecken. Die Lichtaustrittsöffnungen sind typischerweise parallel zu dem Lichtleiter verlaufend angeordnet. Eine derart geradlinig ausgebildete Lichtsignalvorrichtung kann vorteilhafterweise zur Hervorhebung von Längs- oder Querkonturen eines fahrerlosen Transportsystems eingesetzt werden.

Erfindungsgemäß sind die Lichtaustrittsöffnungen an dem Frontelement in mehreren Zeilen angeordnet. Dadurch kann der Lichtsignalvorrichtung eine weitere Dimension hinzugefügt werden. Dies ermöglicht weiter verfeinerte optische Effekte zur Hervorhebung des fahrerlosen Transportsystems. Für jede der Zeilen ist eine separate Lichterzeugungseinheit vorgesehen. Die Zellen können auf diese Weise unabhängig voneinander angesteuert bzw. beleuchtet werden. Jede der Zeilen weist in Höhenrichtung mehrere Lichtaustrittsöffnungen auf. Die Lichtaustrittsöffnungen sind innerhalb einer der Zeilen näher aneinander angeordnet als zwischen zwei benachbarten Zeilen.

Vorzugsweise sind die Lichtquellen als LEDs, insbesondere RGB-LEDs, ausgebildet. Leuchtdioden weisen einen besonders geringen Energieverbrauch auf. Mittels RGB-LEDs (typischerweise umfassend je ein grünes, rotes und blaues LED-Element) können durch geeignete Ansteuerung beliebige Lichtfarben emittiert werden. Insbesondere ermöglichen RGB-LEDs die Anpassung der Lichtfarbe an einen jeweils hervorzuhebenden Betriebszustand des fahrerlosen Transportsystems, beispielsweise ein Abbremsen, eine Vorwärtsfahrt oder eine Richtungsänderung. RGB-LEDs können vorteilhafterweise als RGBW-LEDs mit einem zusätzlichen weißen LED-Element oder besonders bevorzugt als RGBWW-LEDs zur Abstrahlung von weißem Licht unterschiedlicher Farbtemperatur, insbesondere durch Mischen von warmweißem und kaltweißem Licht (typischerweise erhältlich von einem warmweißen und einem kaltweißen LED-Element der RGBWW-LED), ausgebildet sein.

Es kann vorgesehen sein, dass mehrere der Lichtaustrittsöffnungen einen gemeinsamen Leuchtfleck bilden. Insbesondere können mehrere Leuchtflecke jeweils durch eine Mehrzahl der Lichtaustrittsöffnungen gebildet sein. Durch derart vergrößerte Leuchtflecke kann die Wahrnehmbarkeit der Beleuchtung weiter verbessert werden. Die Form und Größe des Leuchtflecks kann durch die Positionierung der Lichtaustrittsöffnungen geeigneter Weise festgelegt werden. Die Leuchtflecke können beispielsweise rund, oval, rechteckig, linienförmig, dreiecksförmig und/oder pfeilförmig ausgebildet sein. Ein Lichtauskoppelelement ist typischerweise genau einem Leuchtfleck zugeordnet. Die einen Lichtfleck bildenden Lichtaustrittsöffnungen sind typischerweise so dicht nebeneinander angeordnet, dass sie mit bloßem Auge (insbesondere im beleuchteten Zustand) nicht voneinander unterschieden werden können.

Alternativ kann vorgesehen sein, dass die Lichtaustrittsöffnungen in dem Frontelement für eine quasi kontinuierliche Lichtabstrahlung ausgebildet und angeordnet sind. Dadurch kann der Eindruck eines gleichmäßigen Leuchtens des Frontelements erweckt werden.

Besonders bevorzugt sind die Lichtauskoppelelemente für eine homogene Lichtabstrahlung über der Länge des Lichtleiters ausgebildet und/oder angeordnet. Dadurch kann der Dämpfung des von den Lichtquellen in den Lichtleiter eingespeisten Lichts in dem Lichtleiter bei zunehmendem Abstand von der jeweiligen Lichtquelle entgegengewirkt werden. Um dies zu erreichen, kann die Größe, Art und/oder Verteilung der Lichtauskoppelelemente geeignet gewählt werden.

### Erfindungsgemäße Lichtsignalanordnung

In den Rahmen der vorliegenden Erfindung fällt weiterhin eine Lichtsignalanordnung für ein fahrerloses Transportsystem mit mehreren, vorzugsweise vier oder acht, oben beschriebenen, erfindungsgemäßen Lichtsignalvorrichtungen. Durch die mehreren Lichtsignalanordnungen können zusätzliche optische Effekte erzielt werden. Insbesondere können unterschiedliche Seiten bzw. Kanten des fahrerlosen Transportsystems mittels jeweils einer Lichtsignalvorrichtung der Lichtsignalanordnung hervorgehoben werden.

Die Lichtsignalvorrichtungen können einen, vorzugsweise rechteckförmigen, Rahmen bilden. Der Rahmen kann umlaufend an dem fahrerlosen Transportsystem angeordnet sein. Entlang einer Seite des Rahmens sind vorzugsweise zwei oder mehr Lichtsignalvorrichtungen aufeinanderfolgend angeordnet. Dies ermöglicht die Beleuchtung der beiden Teilabschnitte der Seite mit der jeweiligen Lichtsignalvorrichtung unabhängig voneinander. Zudem kann dies die Gleichmäßigkeit der Beleuchtung entlang der Seite des Rahmens verbessern.

Die Lichtsignalanordnung kann weiterhin ein Display, insbesondere ein Matrix-Display, aufweisen. Das Display kann zur Anzeige von Symbolen und/oder Schriftzeichen dienen. Mittels des Displays können weitere Informationen wiedergegeben werden. Eine mittels des Displays wiedergegebene Information kann direkt an einen Betrachter des fahrerlosen Transportsystems mit der Lichtsignalanordnung gerichtet sein.

### Erfindungsgemäßes fahrerloses Transportsystem

In den Rahmen der vorliegenden Erfindung fällt ferner ein fahrerloses Transportsystem mit einer oben beschriebenen, erfindungsgemäßen Lichtsignalvorrichtung. Vorzugsweise weist das fahrerlose Transportsystem eine oben beschriebene, erfindungsgemäße Lichtsignalanordnung mit mehreren oben beschriebenen, erfindungsgemäßen Lichtsignalvorrichtungen auf. Das fahrerlose Transportsystem weist ferner eine Steuereinrichtung zur Ansteuerung der Lichtsignalvorrichtung bzw. der Lichtsignalanordnung in Abhängigkeit von einem Betriebszustand des fahrerlosen Transportsystems auf. Das fahrerlose Transportsystem ist dadurch in der Lage, seinen Betriebszustand mittels der Lichtsignalvorrichtung bzw. Lichtsignalanordnung zu visualisieren.

Die Lichtsignalvorrichtung bzw. die Lichtsignalanordnung (vorzugsweise alle Lichtsignalvorrichtungen der Lichtsignalanordnung) können für eine, insbesondere gerichtete, Abstrahlung von Licht nach schräg oben ausgerichtet sein. Dadurch kann vorteilhafterweise eingerichtet sein, dass die Lichtsignalvorrichtung bzw. Lichtsignalanordnung für eine Abstrahlung von Licht in Richtung der Augen eines Betrachters (der sich in einer typischen Position relativ zum fahrerlosen Transportsystem befindet, beispielsweise wenige Meter neben dem fahrerlosen Transportsystem steht) angeordnet ist. Insbesondere kann das Frontelement der Lichtsignalvorrichtung(en) mit der Horizontalen einen Winkel zwischen 30° und 75°, vorzugsweise zwischen 50° und 70°, einschließen.

Das fahrerlose Transportsystem weist grundsätzlich einen Fahrantrieb zum selbsttätigen Bewegen des fahrerlosen Transportsystems und eine Lastaufnahmevorrichtung zur Aufnahme von zu transportierenden Lasten (Ladungen) auf. Die Steuereinrichtung kann weiterhin zum Ansteuern des Fahrantriebs ausgebildet sein.

Die Steuereinheit ist vorzugsweise zur Durchführung eines unten beschriebenen, erfindungsgemäßen Betriebsverfahrens eingerichtet.

Vorzugsweise ist die Lichtsignalvorrichtung bzw. die Lichtsignalanordnung angrenzend an die Lastaufnahmevorrichtung des fahrerlosen Transportsystems angeordnet. Dies ermöglicht die optische Hervorhebung der Lastaufnahmevorrichtung bzw. einer aufgenommenen Last (Ladung). Die Lastaufnahmevorrichtung ist typischerweise oben an dem fahrerlosen Transportsystem angeordnet.

Die Steuereinrichtung kann dazu eingerichtet sein, eine (geplante und/oder bereits in der Ausführung begriffene) Bewegung des fahrerlosen Transportsystems mittels der Lichtsignalvorrichtung bzw. der Lichtsignalanordnung zu visualisieren. Dadurch kann es einem Betrachter ermöglicht werden, eine Bewegung des fahrerlosen Transportsystems vorherzusehen, bevor diese Bewegung (vollständig) ausgeführt ist. Insbesondere kann vorgesehen sein, dass bei einer Vorwärts- oder Rückwärtsfahrt entlang von Seitenkanten des fahrerlosen Transportsystems Lichteffekte, vorzugsweise grünfarbige Helligkeitsmaxima, in Fahrtrichtung propagieren. Ein Abbremsen kann durch ein, insbesondere rotfarbiges, Aufleuchten an einer Rückseite des fahrerlosen Transportsystems angezeigt werden. Eine Richtungsänderung kann durch in Richtung der neuen Fahrtrichtung propagierende Lichteffekte, insbesondere durch orangefarbene Helligkeitsmaxima, an der Rückseite und/oder einer Vorderseite des fahrerlosen Transportsystems angezeigt werden.

Vorzugsweise ist die Steuereinrichtung dazu eingerichtet, mittels der Lichtsignalvorrichtung bzw. der Lichtsignalanordnung eine Information über einen Beladungszustand des fahrerlosen Transportsystems wiederzugeben. Die Information kann beispielsweise das Einhalten bzw. das Überschreiten einer zulässigen Beladung betreffen. Alternativ oder zusätzlich kann die Information die Positionierung, insbesondere ein Verrutschen, einer Ladung auf dem fahrerlosen Transportsystem betreffen. Dadurch kann der Betrieb des fahrerlosen Transportsystems sicherer gestaltet werden.

Es kann vorgesehen sein, dass die Steuereinrichtung dazu eingerichtet ist, mittels der Lichtsignalvorrichtung bzw. der Lichtsignalanordnung auf eine drohende Kollision des fahrerlosen Transportsystems mit einem Hindernis hinzuweisen. Insbesondere kann durch geeignete Lichtsignale einer im geplanten Fahrweg des fahrerlosen Transportsystems befindlichen Person mitgeteilt werden, dass sie diesen Fahrweg blockiert. Ebenso kann durch geeignete Lichtsignale einem Menschen mitgeteilt werden, dass sich ein Objekt als Hindernis im geplanten Fahrweg befindet, sodass dieser das Objekt entfernen kann. Die Steuereinrichtung ist besonders bevorzugt dazu eingerichtet, das fahrerlose Transportsystem anzuhalten, bevor es mit dem Hindernis kollidiert.

### Erfindungsgemäße Verwendung einer Lichtsignalvorrichtung

In den Rahmen der vorliegenden Erfindung fällt zudem eine Verwendung einer oben beschriebenen, erfindungsgemäßen Lichtsignalvorrichtung, insbesondere einer oben beschriebenen, erfindungsgemäßen Lichtsignalanordnung mit mehreren Lichtsignalvorrichtungen, zur Visualisierung eines Betriebszustands eines fahrerlosen Transportsystems. Die Lichtsignalvorrichtung bzw. die Lichtsignalanordnung ist typischerweise eine bordeigene Lichtsignalvorrichtung bzw. Lichtsignalanordnung des fahrerlosen Transportsystems. Das fahrerlose Transportsystem kann ein oben beschriebenes, erfindungsgemäßes fahrerloses Transportsystem sein. Der Betriebszustand kann einen Bewegungszustand des fahrerlosen Transportsystems, beispielsweise eine Fahrgeschwindigkeit und/oder eine Fahrtrichtung und/oder deren jeweilige Änderung, beschreiben. Alternativ oder zusätzlich kann der Betriebszustand einen Beladungszustand beschreiben, beispielsweise im Hinblick auf das Einhalten einer zulässigen Beladung und/oder einer Position einer Last (Ladung). Ferner kann der Betriebszustand einen Ladevorgang und/oder einen Ladezustand eines Akkumulators des fahrerlosen Transportsystems beschreiben.

### Erfindungsgemäßes Betriebsverfahren

In den Rahmen der vorliegenden Erfindung fällt schließlich ein Betriebsverfahren für eine oben beschriebene, erfindungsgemäße Lichtsignalvorrichtung, insbesondere für ein oben beschriebenes, erfindungsgemäßes fahrerloses Transportsystem mit einer Lichtsignalvorrichtung. Das Betriebsverfahren sieht vor, dass gleichzeitig ein von der einen Lichtquelle der Lichterzeugungseinheit abgegebener Lichtstrom reduziert und ein von der anderen Lichtquelle der Lichterzeugungseinheit abgegebener Lichtstrom erhöht wird, sodass ein entlang des Frontelements wanderndes Helligkeitsmaximum von emittiertem Licht erzeugt wird. Dieses Betriebsverfahren erlaubt in vorteilhafter Weise die Visualisierung eines Betriebszustands des fahrerlosen Transportsystems, insbesondere eines Bewegungszustands bzw. dessen Änderung. Wenn mehrere in Zeilen übereinanderliegend angeordnete Lichterzeugungseinheiten vorgesehen sind, können durch einen zeitlichen Versatz der Ansteuerung der Lichtquellen der Lichterzeugungseinheiten der unterschiedlichen Zeilen zusätzliche Effekte erzeugt werden. Insbesondere kann durch eine geringfügig frühere Ansteuerung der Lichtquellen der mittleren Lichterzeugungseinheit(en) der optische Eindruck eines (beispielsweise in Fahrtrichtung wandernden) Pfeils generiert werden.

Weitere Merkmale und Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: ein erfindungsgemäßes fahrerloses Transportsystem aufweisend eine erfindungsgemäße Lichtsignalanordnung mit mehreren erfindungsgemäßen Lichtsignalvorrichtungen, in einer schematischen Perspektivansicht;
- Fig. 2: eine erfindungsgemäße Lichtsignalanordnung mit mehreren erfindungsgemäßen Lichtsignalvorrichtungen, die einen rechteckförmigen Rahmen bilden, und mit einem Matrix-Display, in einer schematischen Aufsicht;
- Fig. 3: die Lichtsignalanordnung von Figur 2 in einer schematischen Explosionsansicht;
- Fig. 4: zwei aufeinanderfolgend angeordnete erfindungsgemäße Lichtsignalvorrichtungen, in einer schematischen Explosionsansicht;
- Fig. 5: eine erfindungsgemäße Lichtsignalvorrichtung in einer schematischen Querschnittsansicht;
- Fig. 6: eine schematische Darstellung eines Betriebsverfahrens für eine Lichtsignalanordnung zur Erzeugung eines wandernden Helligkeitsmaximums.

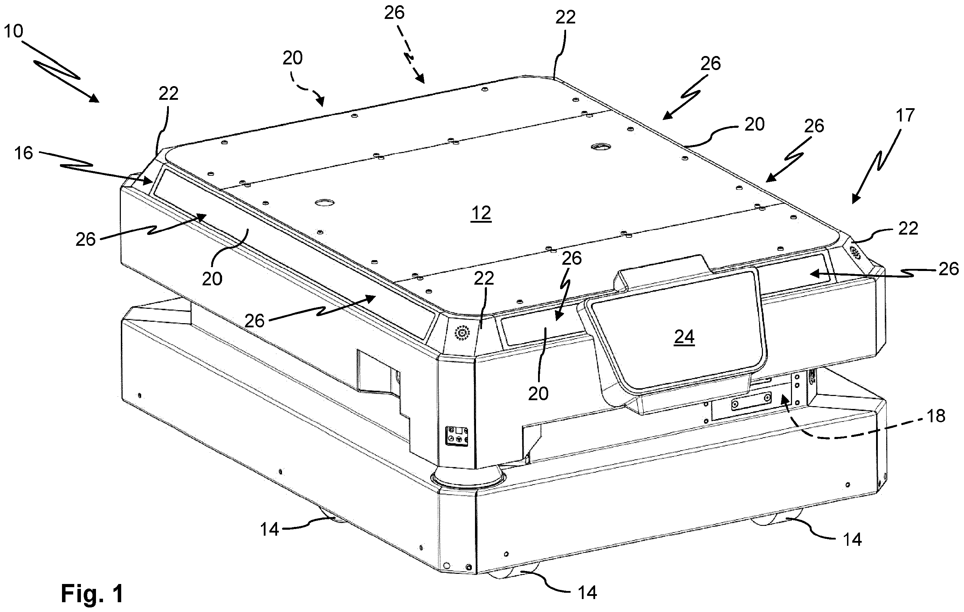

**Figur 1** zeigt ein fahrerloses Transportsystem **10.** Das fahrerlose Transportsystem 10 weist eine Lastaufnahmevorrichtung **12** zur Aufnahme von nicht näher dargestellten Lasten (Ladungen) auf. Das fahrerlose Transportsystem 10 weist ferner einen nicht im Detail dargestellten Fahrantrieb mit Rädern **14** auf. Mittels des Fahrantriebs kann sich das fahrerlose Transportsystem 10 selbsttätig bewegen.

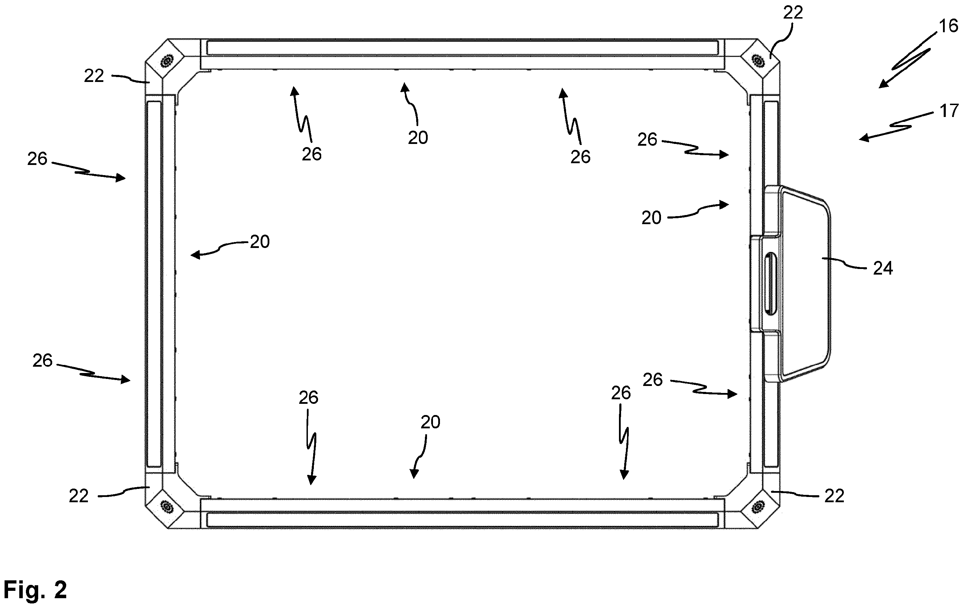

Das fahrerlose Transportsystem 10 weist eine Lichtsignalanordnung **16** auf. Die Lichtsignalanordnung 16 ist hier in der Form eines rechteckförmigen Rahmens **17** ausgebildet, siehe auch **Figur 2****.** Die Lichtsignalanordnung 16 kann unmittelbar angrenzend an die Lastaufnahmevorrichtung 12 am fahrerlosen Transportsystem 10 vorgesehen sein. Hier umgibt die Lichtsignalanordnung 16 die Lastaufnahmevorrichtung 12 umlaufend.

Das fahrerlose Transportsystem 10 weist eine Steuereinrichtung **18** auf. Die Steuereinrichtung 18 dient zum Ansteuern der Lichtsignalanordnung 16 in Abhängigkeit von einem Betriebszustand des fahrerlosen Transportsystems 10. Ferner kann die Steuereinrichtung 18 zum Ansteuern des Fahrantriebs, d. h. zum selbsttätigen Bewegen des fahrerlosen Transportsystems 10 mittels der Räder 14, eingerichtet sein.

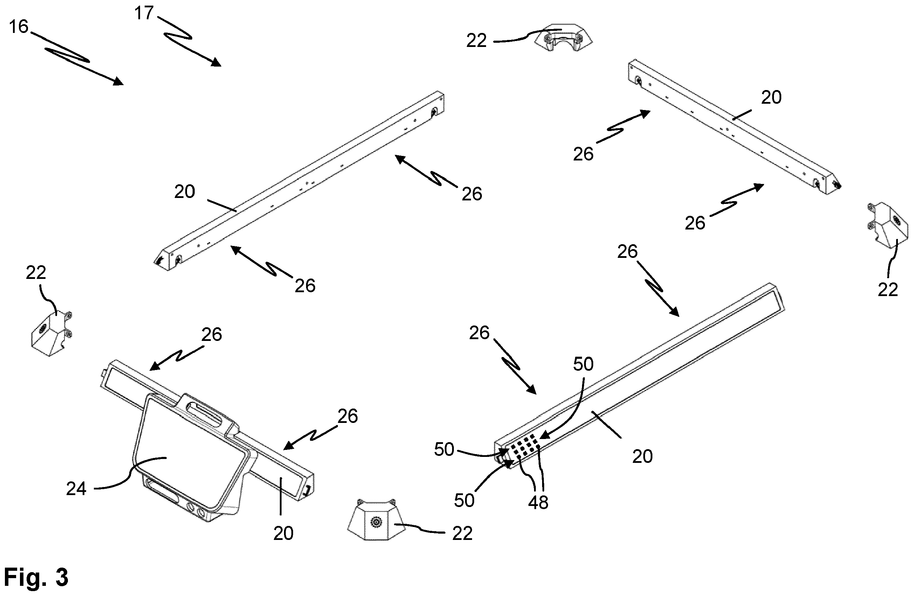

Figur 2 zeigt die Lichtsignalanordnung 16 des fahrerlosen Transportsystems 10 von Figur 1 in Alleinstellung. In **Figur 3** ist die Lichtsignalanordnung 16 in einer Explosionsansicht gezeigt. Die Lichtsignalanordnung 16 umfasst hier vier Seitenelemente **20,** vier Eckverbinder **22,** sowie ein Display **24.** Das Display 24 ist hier als ein Matrix-Display ausgebildet. Das Display 24 dient insbesondere zur Anzeige von Symbolen und oder Schriftzeichen. Das Display 24 kann, vorzugsweise mittig, an einem der Seitenelemente 20 angeordnet sein. Das Display 24 kann ein TFT-Display sein. Das Display 24 kann seitlich zusätzliche LEDs aufweisen. Die seitlichen LEDs können dazu dienen, beispielsweise in der Art von Info- bzw. Warnleuchten, vordefinierte Zustände anzuzeigen. Das Display 24 in der Mitte kann beispielsweise dazu verwendet werden, eine Mimik des fahrerlosen Transportsystems 10 zu simulieren und/oder um detailliertere Statushinweise (z.B. betreffend eine Beladung des fahrerlosen Transportsystems 10) anzuzeigen.

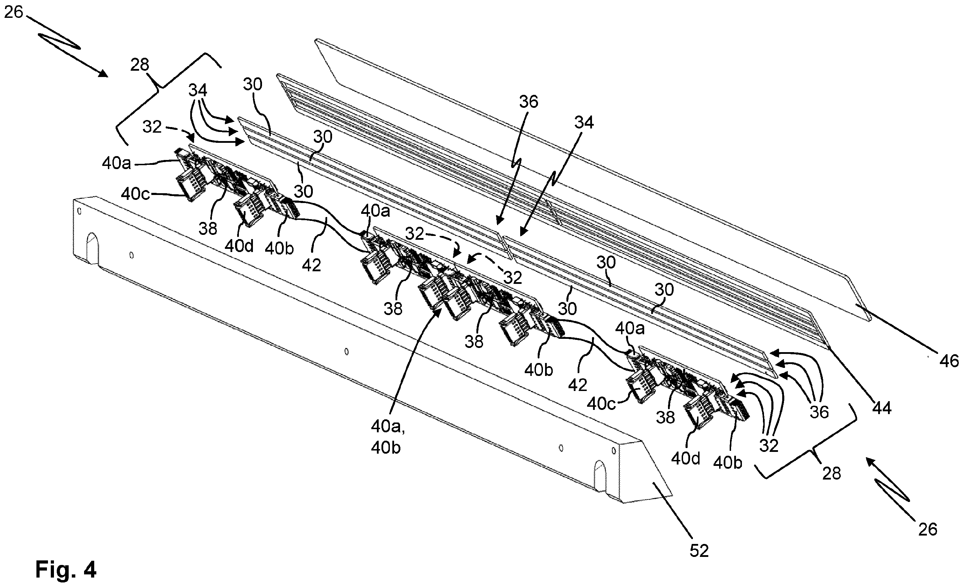

**Figur 4** zeigt ein Seitenelement 20 in einer schematischen Explosionsansicht. Jedes der Seitenelemente 20 weist hier zwei Lichtsignalvorrichtungen **26** auf. Die beiden Lichtsignalvorrichtungen in 26 eines der Seitenelemente 20 sind in Längsrichtung des jeweiligen Seitenelements 20 aufeinanderfolgend angeordnet.

Die Lichtsignalvorrichtungen 26 weisen jeweils mehrere Lichterzeugungseinheiten **28** auf. Hier umfasst jede Lichtsignalvorrichtung 26 drei in Zeilen übereinanderliegend angeordnete Lichterzeugungseinheiten 28. Jede der Lichterzeugungseinheiten 28 umfasst einen langgestreckten Lichtleiter **30.** Die Lichtleiter 30 sind hier geradlinig und parallel zueinander verlaufend ausgebildet. Jede der Lichterzeugungseinheiten 28 umfasst ferner für jeden der Lichtleiter 30 je zwei Lichtquellen **32.** Die Lichtquellen 32 können als LEDs ausgebildet sein. Hier sind die Lichtquellen 32 jeweils als eine RGB-LED ausgebildet. Die Lichtquellen 32 sind jeweils an gegenüberliegenden Enden **34, 36** der Lichtleiter 30 angeordnet. Die Lichtquellen 32 können für eine stirnseitige Einleitung von Licht in die Lichtleiter 30 ausgebildet und angeordnet sein.

Die Lichtquellen 32 für eines der Enden 34, 36 der drei Lichtleiter 30 einer der Lichtsignalvorrichtungen 26 sind hier jeweils auf einer gemeinsamen Platine **38** angeordnet. Die Platinen 38 können jeweils Elektronikbauteile zur Ansteuerung der Lichtquellen 32 aufweisen. Zur Versorgung der Lichtquellen 32 mit elektrischer Energie und Steuersignalen von der Steuereinrichtung 18 sind hier jeweils vier Steckkontakte **40a, 40b, 40c, 40d** an jeder der Platinen 38 vorgesehen. Im gezeigten Ausführungsbeispiel werden nur die Steckkontakte 40a, 40b verwendet. Die Steckkontakte 40c und 40d könnten entfallen. Die Steckkontakte 40a und 40b der beiden Platinen 38 einer der Lichtsignalvorrichtungen 26 können mittels eines Kabels **42** verbunden sein. Die Steckkontakte 40a und 40b der aneinander grenzenden Platinen 38 der beiden Lichtsignalvorrichtungen 26 des Seitenelements 20 können unmittelbar ineinander eingesteckt sein.

Die Lichtleiter 30 der beiden Lichtsignalvorrichtung 26 des Seitenelements 20 sind hier in einer gemeinsamen Lichtleiteraufnahme **44** gehalten. Alternativ könnte auch für jede der Lichtsignalvorrichtungen 26 eine separate Lichtleiteraufnahme vorgesehen sein (nicht dargestellt).

Die Lichtsignalvorrichtungen 26 weisen ein Frontelement **46** auf. Hier ist ein gemeinsames Frontelement 46 für die beiden Lichtsignalvorrichtungen 26 des Seitenteils 20 vorgesehen. Alternativ könnte auch für jede der Lichtsignalvorrichtungen 26 ein separates Frontelement vorgesehen sein (nicht dargestellt).

Das Frontelement 46 weist eine Vielzahl von optisch transparenten Lichtaustrittsöffnungen auf. Von denen Lichtaustrittsöffnungen abgesehen ist das Frontelement 46 intransparent (nicht lichtdurchlässig). Die Lichtaustrittsöffnungen sind aufgrund ihrer geringen Größe in den Figuren nicht zu erkennen. Mehrere Lichtaustrittsöffnungen können in einer solchen Weise gruppiert sein, dass sie einen gemeinsamen Leuchtfleck **48** bilden, vergleiche Figur 3. Die Lichtaustrittsöffnungen bzw. die Leuchtflecke 48 sind hier in drei übereinanderliegenden Zeilen **50** am Frontelement 46 angeordnet. Die Zeilen 50 am Frontelement 46 korrespondieren mit den drei Lichtleitern 30 der Lichtsignalvorrichtungen 26. In Figur 3 sind beispielhaft jeweils vier Leuchtflecke 48 jeder der Zeilen 50 leuchtend dargestellt.

Um Licht von den Lichtquellen 32 durch die Lichtaustrittsöffnungen des Frontelements 46 emittieren zu können, weisen die Lichtleiter 30 jeweils eine Vielzahl von Lichtauskoppelelementen (nicht im einzelnen dargestellt) auf. Die Lichtauskoppelelemente können jeweils durch eine mechanische Veränderung der dem Frontelement 46 zuweisenden Oberflächen der Lichtleiter 30 erhalten sein. Insbesondere kann die Oberfläche der Lichtleiter 30 zur Bildung der Lichtauskoppelelemente mechanisch bearbeitet sein, beispielsweise durch Fräsen. Alternativ können die Lichtauskoppelelemente auf die Lichtleiter 30 aufgedruckt sein.

Die Lichtauskoppelelemente können über die Länge der Lichtleiter 30 so verteilt bzw. über der Länge unterschiedlich ausgebildet sein, dass bei Einleitung von Licht durch eine oder beide der Lichtquellen 32 an den Enden 34, 36 eine gleichmäßige (homogene) Lichtabstrahlung zu dem Frontelement 46 hin erfolgt. Dadurch kann erreicht werden, dass die wahrnehmbare Helligkeit des durch die Lichtaustrittsöffnungen des Frontelements 46 austretenden Lichts über der Länge der Lichtsignalvorrichtung 26 zumindest näherungsweise konstant ist. Die Bestimmung einer geeigneten Ausbildung, insbesondere Größe, und oder Verteilung (Anordnung) der Lichtauskoppelelemente kann vorzugsweise rechnerisch, insbesondere durch Simulation, oder experimentell erfolgen.

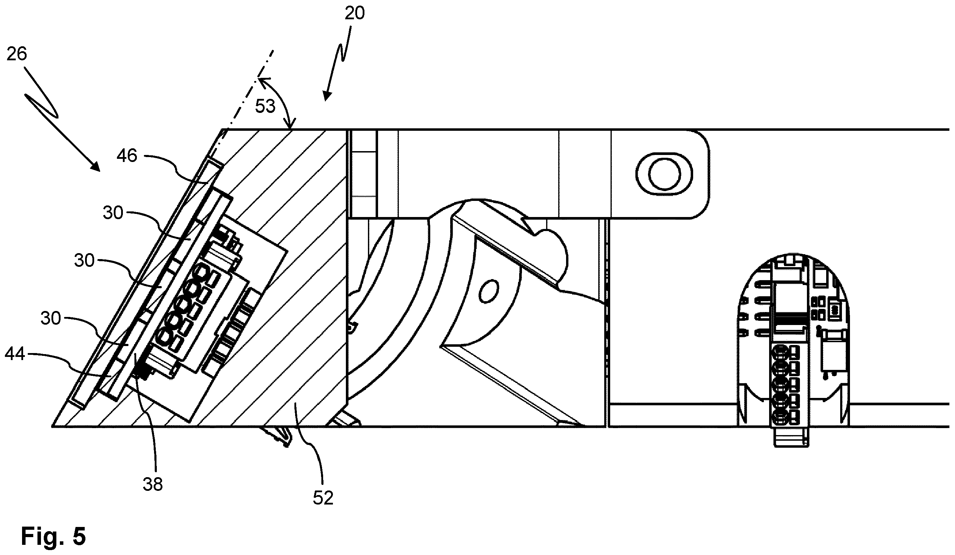

**Figur 5** zeigt einen Querschnitt durch eine der Lichtsignalvorrichtungen 26 gemäß Figur 4 im montierten Zustand. Die Platine 38 mit den Lichtquellen 32, die Lichtleiter 30, die Lichtleiteraufnahme 44 und das Frontelement 46 sind in einem Grundkörper **52** der Lichtsignalvorrichtung 26 aufgenommen. Der Grundkörper 52 ist hier zur Aufnahme der beiden Lichtsignalvorrichtungen 26 des Seitenelements 20 ausgebildet. Alternativ könnte für jede Lichtsignalvorrichtung 26 ein separater Grundkörper vorgesehen sein.

Das Frontelement 46 schließt hier mit der Horizontalen (der Bewegungsebene des fahrerlosen Transportsystems 10, vgl. Figur 1) einen Winkel **53** von 60° ein. Dadurch wird eine gerichtete Abstrahlung von Licht durch die Lichtaustrittsöffnungen nach schräg oben bewirkt. Das abgestrahlte Licht kann auf diese Weise gezielt in die Augen eines in einem typischen Abstand von einigen Metern zum fahrerlosen Transportsystem 10 stehenden Betrachters gelenkt werden. Die Lichtsignalvorrichtungen 26 erscheinen dem Betrachter daher besonders hell leuchtend.

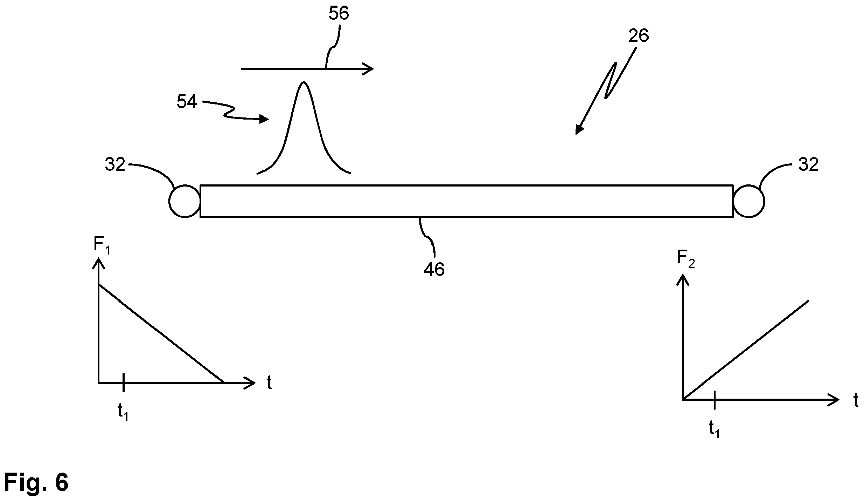

**Figur 6** zeigt in schematischer Form ein Betriebsverfahren für eine Lichtsignalvorrichtung 26. Bei dem Betriebsverfahren wird zum einen ein von der einen, in Figur 6 linken, Lichtquelle 32 der Lichtsignalvorrichtung 26 abgegebener Lichtstrom **F₁** über der Zeit **t** verringert. Gleichzeitig mit der Verringerung des Lichtstroms F₁ wird ein von der zweiten, in Figur 6 rechten Lichtquelle 32 der Lichtsignalvorrichtung 26 abgegebener Lichtstrom **F₂** über der Zeit t erhöht. Die beiden Lichtströme F₁ und F₂ überlagern sich in dem (nicht näher dargestellten) Lichtleiter der Lichtsignalvorrichtung 26. Dadurch wird über die Lichtaustrittsöffnungen des Frontelements 46 ein örtliches Helligkeitsmaximum **54** abgestrahlt. Durch das gleichzeitige Herunter- und Heraufdimmen der ersten bzw. der zweiten Lichtquelle 32 wandert das Helligkeitsmaximum 54 entlang des Frontelements 46, hier von links nach rechts, vergleiche Pfeilrichtung **56.** In Figur 6 ist die Position des Helligkeitsmaximums 54 zu einem Zeitpunkt **t₁** dargestellt.

Dieses Betriebsverfahren kann insbesondere dazu angewandt werden, eine Bewegung, beispielsweise eine Fahrtrichtung oder eine (geplante) Änderung der Fahrtrichtung eines fahrerlosen Transportsystems 10, vergleiche Figur 1, anzuzeigen. Die Steuereinrichtung 18 kann zur Durchführung des Betriebsverfahrens eingerichtet sein.

Das Betriebsverfahren für das fahrerlose Transportsystem 10 kann weiterhin umfassen, dass ein Beladungszustand der Lastaufnahmevorrichtung 12 mittels einer oder mehrerer der Lichtsignalvorrichtungen 26 und/oder des Displays 24 angezeigt wird. Ferner kann das Betriebsverfahren für das fahrerlose Transportsystem 10 umfassen, dass mittels einer oder mehrerer der Lichtsignalvorrichtungen 26 und/oder des Displays 24 auf eine drohende Kollision des fahrerlosen Transportsystems 10 mit einem Hindernis hingewiesen wird. Die Steuereinrichtung 18 kann zur entsprechenden Ansteuerung der Lichtsignalvorrichtungen 26 bzw. des Displays 24 eingerichtet sein.

### Bezuaszeichenliste

fahrerloses Transportsystem **10**
Lastaufnahmevorrichtung **12**
Räder **14**
Lichtsignalanordnung **16**
Rahmen **17**
Steuereinrichtung **18**
Seitenelemente **20**
Eckverbinder **22**
Display **24**
Lichtsignalvorrichtungen **26**
Lichterzeugungseinheit **28**
Lichtleiter **30**
Lichtquellen **32**
gegenüberliegende Enden **34, 36**
Platine **38**
Steckkontakte **40a, 40b, 40c, 40d**
Kabel **42**
Lichtleiteraufnahme **44**
Frontelement **46**
Leuchtfleck **48**
Zeilen **50**
Grundkörper **52**
Winkel **53**
Lichtstrom **F₁, F₂**
Zeit **t**
Zeitpunkt **t₁**
Helligkeitsmaximum **54**
Pfeilrichtung **56**

## Patentansprüche

1. Lichtsignalvorrichtung (26) für ein fahrerloses Transportsystem (10) aufweisend
- ein Frontelement (46) mit einer Vielzahl von optisch transparenten Lichtaustrittsöffnungen, wobei das Frontelement (46) von den Lichtaustrittsöffnungen abgesehen intransparent ist, und
- mehrere Lichterzeugungseinheiten (28) mit jeweils einem Lichtleiter (30)
und mit zwei an gegenüberliegenden Enden des Lichtleiters (30) angeordneten Lichtquellen (32),
wobei der Lichtleiter (30) eine Vielzahl von Lichtauskoppelelementen aufweist, um Licht durch die Lichtaustrittsöffnungen zu emittieren,
wobei die Lichtaustrittsöffnungen an dem Frontelement (46) in mehreren Zeilen (50) angeordnet sind, und
wobei für jede der Zeilen (50) eine separate Lichterzeugungseinheit (28) vorgesehen ist,
**dadurch gekennzeichnet,**
**dass** jede der Zeilen (50) in Höhenrichtung mehrere Lichtaustrittsöffnungen aufweist, wobei die Lichtaustrittsöffnungen innerhalb einer der Zeilen (50) näher aneinander angeordnet sind als zwischen zwei benachbarten Zeilen (50), und
**dass** einer Mehrzahl von Lichtaustrittsöffnungen Licht durch ein einziges Lichtauskoppelelement des jeweiligen Lichtleiters (30) zugeführt wird.

2. Lichtsignalvorrichtung (26) nach Anspruch 1, **dadurch gekennzeichnet, dass** die Lichtquellen (32) als LEDs, insbesondere RGB-LEDs, ausgebildet sind.

3. Lichtsignalvorrichtung (26) nach Anspruch 1 oder 2, **dadurch gekennzeichnet, dass** mehrere der Lichtaustrittsöffnungen einen gemeinsamen Leuchtfleck (48) bilden.

4. Lichtsignalvorrichtung (26) nach einem der vorhergehenden Ansprüche, **dadurch gekennzeichnet, dass** die Lichtauskoppelelemente für eine homogene Lichtabstrahlung über der Länge des jeweiligen Lichtleiters (30) ausgebildet und/oder angeordnet sind.

5. Lichtsignalanordnung (16) für ein fahrerloses Transportsystem (10) mit mehreren, vorzugsweise vier oder acht, Lichtsignalvorrichtungen (26) nach einem der vorhergehenden Ansprüche.

6. Lichtsignalanordnung (16) nach Anspruch 5, **dadurch gekennzeichnet, dass** die Lichtsignalvorrichtungen (26) einen rechteckförmigen Rahmen (17) bilden.

7. Lichtsignalanordnung (16) nach Anspruch 6, **dadurch gekennzeichnet, dass** entlang einer Seite des Rahmens (17) zwei Lichtsignalvorrichtungen (26) aufeinanderfolgend angeordnet sind.

8. Lichtsignalanordnung (16) nach einem der Ansprüche 5 bis 7, weiterhin aufweisend ein Display (24), insbesondere ein Matrix-Display, zur Anzeige von Symbolen und/oder Schriftzeichen.

9. Fahrerloses Transportsystem (10) mit einer Lichtsignalvorrichtung (26) nach einem der Ansprüche 1 bis 4, vorzugsweise mit einer Lichtsignalanordnung (16) nach einem der Ansprüche 5 bis 8, und mit einer Steuereinrichtung (18) zur Ansteuerung der Lichtsignalvorrichtung (26) bzw. der Lichtsignalanordnung (16) in Abhängigkeit von einem Betriebszustand des fahrerlosen Transportsystems (10).

10. Fahrerloses Transportsystem (10) nach Anspruch 9, **dadurch gekennzeichnet, dass** die Lichtsignalvorrichtung (26) bzw. die Lichtsignalanordnung (16) für eine gerichtete Abstrahlung von Licht nach schräg oben ausgerichtet ist, insbesondere wobei das Frontelement (46) mit einer Bewegungsebene des fahrerlosen Transportsystems (10) einen Winkel zwischen 30° und 75°, vorzugsweise zwischen 50° und 70°, einschließt.

11. Fahrerloses Transportsystem (10) nach Anspruch 9 oder 10, **dadurch gekennzeichnet, dass** die Lichtsignalvorrichtung (26) bzw. die Lichtsignalanordnung (16) angrenzend an eine Lastaufnahmevorrichtung (12) des fahrerlosen Transportsystems (10) angeordnet ist und die Lastaufnahmevorrichtung umlaufend umgibt.

12. Fahrerloses Transportsystem (10) nach einem der Ansprüche 9 bis 11, **dadurch gekennzeichnet, dass** die Steuereinrichtung (18) dazu eingerichtet ist, eine Bewegung des fahrerlosen Transportsystems (10) mittels der Lichtsignalvorrichtung (26) bzw. der Lichtsignalanordnung (16) zu visualisieren.

13. Fahrerloses Transportsystem (10) nach einem der Ansprüche 9 bis 12, **dadurch gekennzeichnet, dass** die Steuereinrichtung (18) dazu eingerichtet ist, mittels der Lichtsignalvorrichtung (26) bzw. der Lichtsignalanordnung (16) eine Information über einen Beladungszustand des fahrerlosen Transportsystems (10) wiederzugeben.

14. Fahrerloses Transportsystem (10) nach einem der Ansprüche 9 bis 13, **dadurch gekennzeichnet, dass** die Steuereinrichtung (18) dazu eingerichtet ist, mittels der Lichtsignalvorrichtung (26) bzw. der Lichtsignalanordnung (16) auf eine drohende Kollision des fahrerlosen Transportsystems (10) mit einem Hindernis hinzuweisen.

15. Verwendung einer Lichtsignalvorrichtung (26) nach einem der Ansprüche 1 bis 4, insbesondere einer Lichtsignalanordnung (16) nach einem der Ansprüche 5 bis 8, zur Visualisierung eines Betriebszustands eines fahrerlosen Transportsystems (10).

16. Betriebsverfahren für eine Lichtsignalvorrichtung (26) nach einem der Ansprüche 1 bis 4, insbesondere für ein fahrerloses Transportsystem (10) nach einem der Ansprüche 9 bis 14, wobei gleichzeitig ein von der einen Lichtquelle (32) der Lichterzeugungseinheit (28) abgegebener Lichtstrom reduziert und ein von der anderen Lichtquelle (32) der Lichterzeugungseinheit (28) abgegebener Lichtstrom erhöht wird, sodass ein entlang des Frontelements (46) wanderndes Helligkeitsmaximum (54) von emittiertem Licht erzeugt wird.

## Claims

1. Light signal device (26) for a driverless transport system (10), comprising
- a front element (46) having a plurality of optically transparent light exit openings, the front element (46) being opaque apart from the light exit openings, and
- several light generating units (28), each having a light guide (30) and having two light sources (32) arranged at opposite ends of the light guide (30),
the light guide (30) having a plurality of light decoupling elements in order to emit light through the light exit openings,
the light exit openings being arranged on the front element (46) in a plurality of rows (50), and
a separate light generating unit (28) being provided for each of the rows (50), **characterized in that**
each of the rows (50) has a plurality of light exit openings in height direction, the light exit openings being arranged closer together within one of the rows (50) than between two adjacent rows (50), and
light is supplied to a plurality of light exit openings by a single light decoupling element of the respective light guide (30).

2. Light signal device (26) according to claim 1, **characterized in that** the light sources (32) are in the form of LEDs, in particular RGB LEDs.

3. Light signal device (26) according to claim 1 or claim 2, **characterized in that** several of the light exit openings form a common light spot (48).

4. Light signal device (26) according to any of the preceding claims, **characterized in that** the light decoupling elements are designed and/or arranged for homogeneous light emission over the length of the respective light guide (30).

5. Light signal arrangement (16) for a driverless transport system (10), comprising a plurality, preferably four or eight, of light signal devices (26) according to any of the preceding claims.

6. Light signal arrangement (16) according to claim 5, **characterized in that** the light signal devices (26) form a rectangular frame (17).

7. Light signal arrangement (16) according to claim 6, **characterized in that** two light signal devices (26) are arranged in succession along one side of the frame (17).

8. Light signal arrangement (16) according to any of claims 5 to 7, further comprising a display (24), in particular a matrix display, for displaying symbols and/or characters.

9. Driverless transport system (10) comprising a light signal device (26) according to any of claims 1 to 4, preferably comprising a light signal arrangement (16) according to any of claims 5 to 8, and comprising a controller (18) for actuating the light signal device (26) or the light signal arrangement (16) depending on an operating state of the driverless transport system (10).

10. Driverless transport system (10) according to claim 9, **characterized in that** the light signal device (26) or the light signal arrangement (16) is oriented for a directed emission of light obliquely upward, in particular the front element (46) and a plane of movement of the driverless transport system (10) enclosing an angle between 30° and 75°, preferably between 50° and 70°.

11. Driverless transport system (10) according to claim 9 or claim 10, **characterized in that** the light signal device (26) or the light signal arrangement (16) is arranged adjacent to a load-bearing device (12) of the driverless transport system (10) and surrounds the load-bearing device.

12. Driverless transport system (10) according to any of claims 9 to 11, **characterized in that** the controller (18) is set up to visualize a movement of the driverless transport system (10) by means of the light signal device (26) or the light signal arrangement (16).

13. Driverless transport system (10) according to any of claims 9 to 12, **characterized in that** the controller (18) is set up to provide information regarding a load state of the driverless transport system (10) by means of the light signal device (26) or the light signal arrangement (16).

14. Driverless transport system (10) according to any of claims 9 to 13, **characterized in that** the controller (18) is set up to indicate an imminent collision of the driverless transport system (10) with an obstacle by means of the light signal device (26) or the light signal arrangement (16).

15. Use of a light signal device (26) according to any of claims 1 to 4, in particular a light signal arrangement (16) according to any of claims 5 to 8, for visualizing an operating state of a driverless transport system (10).

16. Operating method for a light signal device (26) according to any of claims 1 to 4, in particular for a driverless transport system (10) according to any of claims 9 to 14, wherein, simultaneously, a luminous flux emitted by one light source (32) of the light generating unit (28) is reduced and a luminous flux emitted by the other light source (32) of the light generating unit (28) is increased, so that a brightness maximum (54), migrating along the front element (46), of emitted light is generated.

## Revendications

1. Dispositif (26) de signalisation lumineuse, dévolu à un système (10) de transport sans conducteur et comprenant
- un élément frontal (46) présentant une multiplicité d'orifices de sortie de lumière, optiquement transparents, ledit élément frontal (46) étant opaque abstraction faite desdits orifices de sortie de lumière, et
- plusieurs unités (28) génératrices de lumière munies, respectivement, d'un guide de lumière (30)
et de deux sources lumineuses (32) implantées à des extrémités opposées dudit guide de lumière (30),
lequel guide de lumière (30) est doté d'une multiplicité d'éléments de découplage de lumière, en vue d'émettre de la lumière à travers lesdits orifices de sortie de lumière,
sachant que lesdits orifices de sortie de lumière sont agencés en plusieurs rangées (50) sur ledit élément frontal (46), et
sachant qu'une unité distincte (28), génératrice de lumière, est prévue pour chacune desdites rangées (50),
**caractérisé par le fait**
**que** chacune des rangées (50) compte plusieurs orifices de sortie de lumière dans le sens de la hauteur, lesquels orifices de sortie de lumière sont plus rapprochés les uns des autres, à l'intérieur de l'une desdites rangées (50), qu'entre deux rangées (50) voisines ; et par le fait
**que** de la lumière est délivrée à une pluralité d'orifices de sortie de lumière par l'intermédiaire d'un unique élément de découplage de lumière du guide de lumière (30) considéré.

2. Dispositif (26) de signalisation lumineuse selon la revendication 1, **caractérisé par le fait que** les sources lumineuses (32) sont réalisées sous la forme de DEL, notamment de DEL RVB.

3. Dispositif (26) de signalisation lumineuse selon la revendication 1 ou 2, **caractérisé par le fait que** plusieurs, parmi les orifices de sortie de lumière, forment une tache lumineuse commune (48).

4. Dispositif (26) de signalisation lumineuse selon l'une des revendications précédentes, **caractérisé par le fait que** les éléments de découplage de lumière sont conçus, et/ou agencés, en vue d'une diffusion de lumière homogène sur la longueur du guide de lumière (30) considéré.

5. Agencement (16) de signalisation lumineuse, dévolu à un système (10) de transport sans conducteur et comprenant plusieurs, de préférence quatre ou huit dispositifs (26) de signalisation lumineuse conformes à l'une des revendications précédentes.

6. Agencement (16) de signalisation lumineuse selon la revendication 5, **caractérisé par le fait que** les dispositifs (26) de signalisation lumineuse forment un cadre rectangulaire (17).

7. Agencement (16) de signalisation lumineuse selon la revendication 6, **caractérisé par le fait que** deux dispositifs (26) de signalisation lumineuse sont placés en succession mutuelle le long d'un côté du cadre (17).

8. Agencement (16) de signalisation lumineuse selon l'une des revendications 5 à 7, par ailleurs pourvu d'un affichage (24), en particulier d'un affichage matriciel destiné à l'affichage de symboles et/ou de caractères d'écriture.

9. Système (10) de transport sans conducteur équipé d'un dispositif (26) de signalisation lumineuse conforme à l'une des revendications 1 à 4, de préférence d'un agencement (16) de signalisation lumineuse conforme à l'une des revendications 5 à 8, et d'un dispositif de commande (18) affecté au pilotage respectif dudit dispositif (26) de signalisation lumineuse, ou dudit agencement (16) de signalisation lumineuse, en fonction d'un état opérationnel dudit système (10) de transport sans conducteur.

10. Système (10) de transport sans conducteur selon la revendication 9, **caractérisé par le fait que** le dispositif (26) de signalisation lumineuse, ou l'agencement (16) de signalisation lumineuse, est respectivement organisé en vue d'une diffusion de lumière dirigée à l'oblique vers le haut, l'élément frontal (46) décrivant alors, en particulier, un angle compris entre 30° et 75°, de préférence entre 50° et 70° avec un plan de mouvement dudit système (10) de transport sans conducteur.

11. Système (10) de transport sans conducteur selon la revendication 9 ou 10, **caractérisé par le fait que** le dispositif (26) de signalisation lumineuse ou l'agencement (16) de signalisation lumineuse occupe, respectivement, un emplacement adjacent à un dispositif (12) de réception de charges dudit système (10) de transport sans conducteur, et ceinture périphériquement ledit dispositif de réception de charges.

12. Système (10) de transport sans conducteur selon l'une des revendications 9 à 11, **caractérisé par le fait que** le dispositif de commande (18) est configuré en vue de visualiser un mouvement dudit système (10) de transport sans conducteur au moyen, respectivement, du dispositif (26) de signalisation lumineuse ou de l'agencement (16) de signalisation lumineuse.

13. Système (10) de transport sans conducteur selon l'une des revendications 9 à 12, **caractérisé par le fait que** le dispositif de commande (18) est configuré en vue de restituer, respectivement au moyen du dispositif (26) de signalisation lumineuse ou de l'agencement (16) de signalisation lumineuse, une information relative à un état de chargement dudit système (10) de transport sans conducteur.

14. Système (10) de transport sans conducteur selon l'une des revendications 9 à 13, **caractérisé par le fait que** le dispositif de commande (18) est configuré en vue de notifier, respectivement au moyen du dispositif (26) de signalisation lumineuse ou de l'agencement (16) de signalisation lumineuse, une menace de collision dudit système (10) de transport sans conducteur avec un obstacle.

15. Utilisation d'un dispositif (26) de signalisation lumineuse conforme à l'une des revendications 1 à 4, notamment d'un agencement (16) de signalisation lumineuse conforme à l'une des revendications 5 à 8, pour visualiser un état opérationnel d'un système (10) de transport sans conducteur.

16. Procédé d'exploitation dédié à un dispositif (26) de signalisation lumineuse conforme à l'une des revendications 1 à 4, notamment à un système (10) de transport sans conducteur conforme à l'une des revendications 9 à 14, procédé dans lequel un flux de lumière émis par l'une (32) des sources lumineuses de l'unité (28) génératrice de lumière est diminué et un flux de lumière, émis par l'autre source lumineuse (32) de ladite unité (28) génératrice de lumière, est augmenté en simultanéité, de manière à engendrer un maximum de luminosité (54) de lumière émise se déplaçant le long de l'élément frontal (46).
